# EUROPEAN PATENT APPLICATION

(11) **EP 2 557 483 A2**
(43) Date of publication of application: **13.02.2013**
(21) Application number: 12179509.0
(22) Date of filing: 07.08.2012
(51) Int. Cl.: G06F 3/02, H01H 13/702, H01H 13/785

(54) **Substrates for flexible keyboards and methods of manufacturing the same**

(30) Priority: 12.08.2011 US 201161522977 P; 31.07.2012 US 201213562459
(71) Applicant: Chen, Shi-Chiung, Taoyuan County 333 (TW)
(72) Inventor: Chen, Shi-Chiung, Taoyuan County 333 (TW)
(74) Representative: Grünecker, Kinkeldey, Stockmair & Schwanhäusser

(57) **Abstract**

A keyboard that comprises a flexible film of a thickness having a first surface and a second surface spaced apart from the first surface by the thickness of the film; a plurality of shallow wells in the flexible film, each shallow well including a chamber formed into the flexible film from the first surface and corresponds to one key of the keyboard; a plurality of sensor, each sensor is configured in the chamber of one of the shallow wells; a patterned conductive layer on the flexible film; and an adhesive layer on the patterned conductive layer.

## Description

### BACKGROUND OF THE INVENTION

The present invention generally relates to micro fabrication and, more particularly, to substrates for flexible keyboards and methods of manufacturing the same.

With the demand in increasing portability of keyboards, as with most types of electronic products, the trend of providing thinner, lighter, and more flexible keyboards has emerged. Some keyboards are designed out of flexible materials that can roll up in a moderately tight bundle. The external materials are generally silicon or polyurethane. Such keyboards usually has a thickness of approximately a centimeter or greater. It is desirable to provide a thinner and lighter keyboard that has a thickness of less than or equal to 500 micrometer (µm), and highly flexible.

### BRIEF SUMMARY OF THE INVENTION

One example consistent with the invention may provide a flexible keyboard. The keyboard may comprise a flexible film of a thickness having a first surface and a second surface spaced apart from the first surface by the thickness of the film; a plurality of shallow wells in the flexible film, each shallow well including a chamber formed into the flexible film from the first surface and corresponds to one key of the keyboard; a plurality of sensor, each sensor is configured in the chamber of one of the shallow wells; a patterned conductive layer on the flexible film; and an adhesive layer on the patterned conductive layer.

Another example consistent with the invention may provide a substrate for a flexible keyboard. The substrate may comprise a flexible film of a thickness having a first surface and a second surface spaced apart from the first surface by the thickness of the film; and a plurality of shallow wells in the flexible film, each shallow well including a chamber formed into the flexible film from the first surface and corresponds to one key of the keyboard.

Other objects, advantages and novel features of the present invention will be drawn from the following detailed examples of the present invention with attached drawings.

### BRIEF DESCRIPTION OF THE SEVERAL VIEWS OF THE DRAWINGS

The foregoing summary as well as the following detailed description of the preferred examples of the present invention will be better understood when read in conjunction with the appended drawings. For the purposes of illustrating the invention, there are shown in the drawings examples which are presently preferred. It is understood, however, that the invention is not limited to the precise arrangements and instrumentalities shown. In the drawings:

FIG. 1 is a schematic diagram illustrating a cross section of a flexible keyboard in accordance with an example of the present invention;

FIG. 2 is a schematic diagram illustrating a cross section of a pair of micro-punching molds; and

FIG. 3 is a flow diagram illustrating a method for fabricating the flexible keyboard in accordance with an example of the present invention.

### DETAILED DESCRIPTION OF THE INVENTION

Reference will now be made in detail to the present examples of the invention illustrated in the accompanying drawings. Wherever possible, the same reference numbers will be used throughout the drawings to refer to the same or like portions.

The present invention utilizes a micro-fabrication technology to form flexible films with shallow wells. Specifically, micro-fabrication technology is employed to form micro-structures in a thin and flexible polymer film, which may serve as the main body of a flexible keyboard. A microstructure in a film according to the present invention refers to a structure with an opening punched into the film from a first surface with a precisely controlled depth, but does not punch through the film.

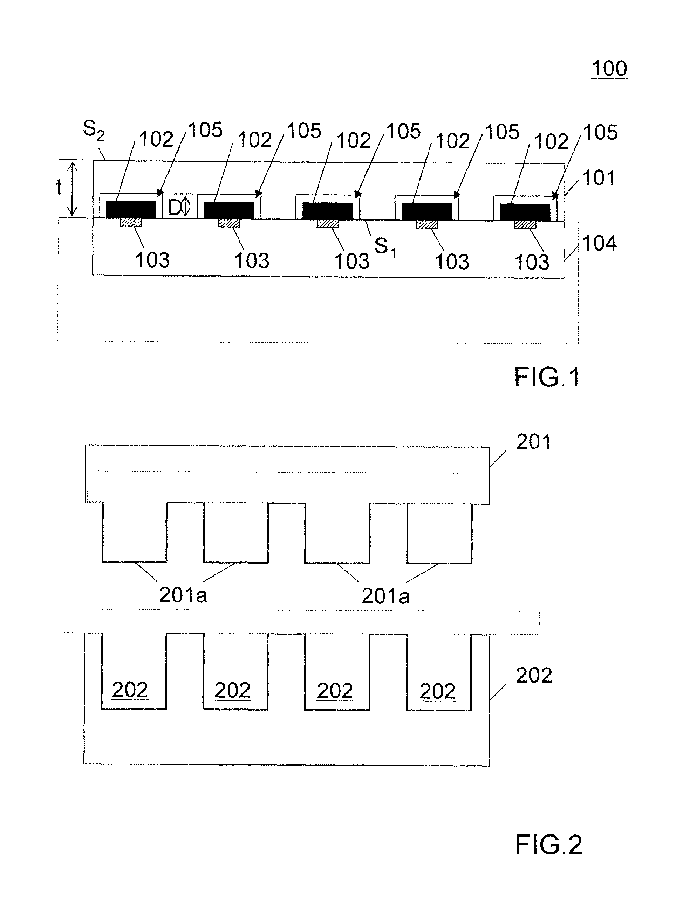

FIG. 1 is a cross sectional diagram illustrating a flexible keyboard 100 in accordance with an example of the present invention. The flexible keyboard 100 comprises a flexible film 101, a plurality of sensors 102, a patterned conductive layer 103 and an adhesive film 104.

The flexible film 101 has a thickness t, which may range from 150 to 250 micrometers (µm). The flexible film 101 has a first surface S₁ and a second surface S₂ spaced apart by the thickness t of the flexible film 101.

The flexible film comprises a polymer which provides the film a 90% or greater transparency. For example, the polymer may be one of polyethylene terephthalate (PET), polycarbonate (PC) and optical polyethylene naphthalate (OPEN).

OPEN has the following formula:

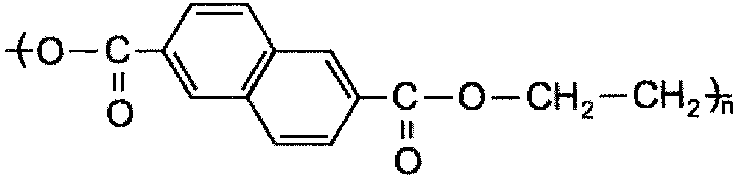

A plurality of shallow wells 105 are formed in the flexible film 101, each having a predetermined depth D from the first surface S₁. The predetermined depth D may be approximately half the thickness of the flexible film 101. The plurality of shallow wells 105 are arranged in a pattern according to the design of the flexible keyboard 100, where each shallow well 105 corresponds to a key on the keyboard 100, for example, a QWERTY keyboard. Furthermore, the shape and size of the cross section of each shallow well 105 may vary based on the key which the each shallow well 105 corresponds to.

Each of the sensors 102 is disposed in one of the shallow wells 105. The sensors 102 are capable of sensing static electricity. When a user moves a finger approximately 1 millimeter (mm) above the second surface S₂, the sensor 102 underneath the second surface S₂ which the finger hovers over may detect the static electricity at the finger tip of the user, and send out a signal indicating that the key has been selected by the user.

The patterned conductive layer 103 is connected to the plurality of sensors 102, and patterned in such a way as to receive signals from the plurality of sensors 102 and transmit the received signals to a processor (not shown). The patterned conductive layer 103 may comprise copper, and may have a thickness of approximately one milli-inch, i.e. 25.4 µm.

The adhesive film 104 may comprise a polymer core selected from one of PET, PC and OPEN, and a water glue, such as an acrylic-base glue, on one surface of the adhesive film 104. The thickness of the adhesive film 104 may be between 100 and 125 µm. The adhesive film 104 is attached to the first surface S₁ of the flexible film 101.

The flexible film 101 with the shallow wells 105 according to the present invention provides the means to manufacture a keyboard that is very thin and highly flexible, to the extent that it can be rolled up at by at least two turns (720°).

FIG. 2 is a schematic diagram illustrating a cross section of a pair of micro-punching molds 201, 202 for fabricating the shallow wells 105 in the flexible film 101.

The pair of micro-punching molds 201, 202 comprise a first mold 201 and a second mold 202. The first mold 201 comprises a plurality of protrusions 201 a, and the second mold 202 comprises a plurality of shallow wells 202a, which correspond to the plurality of protrusions 201 a of the first mold 201. The size of the molds 201, 202 and the number of protrusions and shallow wells may vary and be customized based on the application of the film.

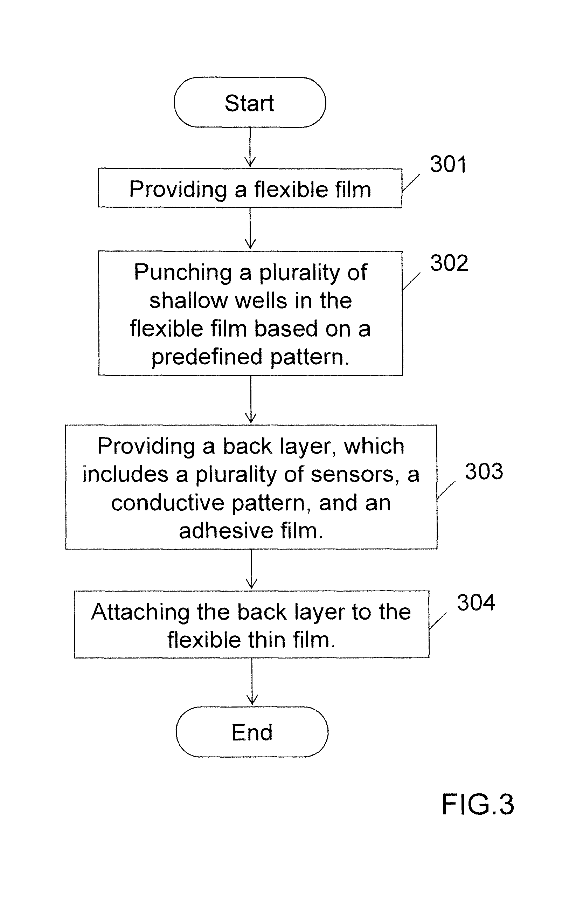

A method for manufacturing the flexible keyboard 100 according to an example of the present invention will now be described in reference to FIG. 3.

First, at step 301 a roll of flexible film 101 comprising one of PET, PC and OPEN is unrolled and placed between the pair of micro-punching molds 201, 202.

Next, at step 302, the flexible film 101 is punched by the pair of micro-punching molds 201, 202 by a "kiss-touch" method. Specifically, the force which the first mold 201 punches the flexible film 101 is controlled so that the first mold 201 does not punch through the flexible film 101 but punches a plurality of shallow wells 105 in the flexible film 101 with the desired depth.

At step 303, a prefabricated back layer is provided. The prefabricated back layer includes the adhesive film 104, conductive patter 103 and plurality of sensors 102 described above.

Subsequently, at step 304, the back layer is attached to the punched flexible film 101.

In another example, the plurality of sensors 102, the conductive layer 103 and the adhesive film 104 are provided onto the flexible film 101 separately.

In addition, in order to improve the sensitivity of the flexible keyboard 100 which comprises sensors 102 for sensing static electricity, a layer of metal film may be provided on one of the first surface S₁ and the second surface S₂ of the flexible thin film 101. For example, if the flexible keyboard 100 is intended to be sold in regions that are more humid, a layer of metal film may be coated on the second surface S₂ of the flexible film 101. On the other hand, if the flexible keyboard 100 is intended to be sold in regions that are drier, a layer of metal film may be provided on the first surface S₁ of the flexible film 101.

The layer of metal film may comprise silver, platinum, copper, and aluminum, and may be sputtered onto the flexible film 101.

In describing representative examples of the present invention, the specification may have presented the method and/or process of operating the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the spirit and scope of the present invention.

It will be appreciated by those skilled in the art that changes could be made to the examples described above without departing from the broad inventive concept thereof. It is understood, therefore, that this invention is not limited to the particular examples disclosed, but it is intended to cover modifications within the spirit and scope of the present invention as defined by the appended claims.

## Claims

1. A flexible keyboard, the keyboard comprising:
a flexible film of a thickness having a first surface and a second surface spaced apart from the first surface by the thickness of the film;
a plurality of shallow wells in the flexible film, each shallow well including a chamber formed into the flexible film from the first surface and corresponding to one key of the keyboard;
a plurality of sensors, each sensor being disposed in the chamber of one of the shallow wells;
a patterned conductive layer on the flexible film; and
an adhesive layer on the patterned conductive layer.

2. The keyboard of claim 1, wherein each shallow well has a predetermined depth from the first surface.

3. The keyboard of claim 2, wherein the predetermined depth of each shallow well is half the thickness of the flexible film.

4. The keyboard of claim 1, wherein the thickness of the flexible film is between 0.15 to 0.25 millimeter (mm).

5. The keyboard of claim 1, wherein the flexible film comprises a polymer which provides the flexible film a 90% or greater transparency.

6. The keyboard of claim 5, wherein the polymer is one of polyethylene terephthalate (PET), polycarbonate (PC) and optical polyethylene naphthalate (OPEN).

7. The keyboard of claim 1, wherein the adhesive film includes a polymeric core comprising one of PET, PC and OPEN.

8. The keyboard of claim 1, wherein the keyboard has a thickness of approximately 0.5 mm.

9. The keyboard of claim 1 further comprising a processor electrically connected to the patterned conductive layer for receiving signals from the sensors.

10. The keyboard of claim 1, wherein the first surface of the flexible film is sputtered with at least one of silver, platinum, copper and aluminum.

11. The keyboard of claim 1, wherein the second surface of the flexible film is sputtered with at least one of silver, platinum, copper and aluminum.

12. A substrate for a flexible keyboard, the substrate comprising:
a flexible film of a thickness having a first surface and a second surface spaced apart from the first surface by the thickness of the film; and
a plurality of shallow wells in the flexible film, each shallow well including a chamber formed into the flexible film from the first surface and corresponding to one key of the keyboard.

13. The substrate of claim 12, wherein the flexible film comprises a polymer which provides the flexible film a 90% or greater transparency.

14. The substrate of claim 13, wherein the polymer is one of PET, PC and OPEN.
